# EUROPEAN PATENT APPLICATION

(11) **EP 4 358 013 A1**
(43) Date of publication of application: **24.04.2024**
(21) Application number: 22825258.1
(22) Date of filing: 14.06.2022
(51) Int. Cl.: G06Q 50/30, B60L 53/18, B60L 53/30, B60L 53/66, G06V 40/12, H05K 5/04

(54) **POWER CHARGING AND DISCHARGING FACILITY FOR E-MOBILITY, COMPRISING EVENT DATA RECORDING DEVICE, AND SERVER COMPUTER DEVICE FOR MANAGING POWER CHARGING AND DISCHARGING FACILITIES AND PREDICTING REAL-TIME DANGER**

(30) Priority: 15.06.2021 KR 20210077123
(71) Applicant: Andante Co., Ltd., Seoul 07238 (KR); Kim, Won Kug, Andong-si, Gyeongsangbuk-do 36600 (KR)
(72) Inventor: KIM, Won Kug, Andong-si, Gyeongsangbuk-do 36600 (KR)
(74) Representative: Gulde & Partner
(86) International application number: PCT/KR2022/008338
(87) International publication number: WO 2022/265333

(57) **Abstract**

Provided is a power charging/discharging facility that operates to provide, upon request, charging power to a first e-mobility. The power charging/discharging facility of the present disclosure includes a sensor portion, the sensor portion comprising one or more sensors of a camera sensor, a shock detection sensor, a vibration detection sensor, a temperature sensor, a humidity sensor, a rain sensor, and an electric leakage sensor, an event data recording device for the power charging/discharging facility, and a power line for charging power supporting providing of the charging power from the power charging/discharging facility to the first e-mobility, wherein the event data recording device includes a housing, a data receiving portion configured to continuously receive event data about the power charging/discharging facility, wherein the event data comprises one or more pieces of measurement information from the one or more sensors of the sensor portion, and a data recording portion configured to store the event data.

## Description

### TECHNICAL FIELD

The present disclosure approximately relates to a power charging/discharging facility for e-mobility and a real-time risk prediction server for managing the same. The present disclosure, in detail, relates to a power charging/discharging facility including an event data recording device for collecting and hermetically sealing and storing various pieces of event data generated according to an operation, and providing records with safely, authenticity, and integrity, a risk prediction server for receiving, in real time, data collected and stored from each power charging/discharging facility, analyzing the data, predicting the possibility of real-time risk occurrence for each power charging/discharging facility, and notifying the risk, a method of supporting power sharing between e-mobilities through the power charging/discharging facility and the server, and the like.

### BACKGROUND ART

Industries related to various mobility devices including vehicles or means of transportation have gradually been reorganized mainly around e-mobility, which uses electricity and motors as propulsion power sources, moving away from the traditional use of fossil fuels and engines. Also, as the spread of various e-mobility increases, the spread of power chargers therefor is also rapidly increasing.

E-mobility such as electric vehicles and the like includes high voltage batteries of typically 400 V - 800 V (or more), and research for increasing battery voltage for charge time reduction has been continuously conducted. With the increase in the battery voltage for e-mobility, the output of a charger for battery charging of e-mobility has also increased, and thus, power charging stations for e-mobility have increasingly become high risk facilities that handle high voltage power. Nevertheless, to date, interest in power charging stations has mainly focused on rapid distribution rather than safe management, and a large number of power charging station facilities are operating without appropriate safety measures in place or are in a state of shutdown without knowing the cause.

Meanwhile, regarding the distribution of power charging stations, if many power charging stations connected to the power grid are placed in one area, the peak power supplied through the grid may increase and grid collapse may occur without transmission line expansion. To solve this problem, the use of power charging stations using energy storage systems (ESS) has been suggested. For power charging stations using ESS, depending on the need and situation, electric energy from an external power source may be received and stored, and the stored electric energy may be provided for charging external e-mobility. Thus, it may be possible to flexibly operate power charging/discharging facility without putting a strain on the existing power grid.

### DESCRIPTION OF EMBODIMENTS

### TECHNICAL PROBLEM

It is an objective of the present disclosure to provide a power charging/discharging facility and the like, as a high risk facility handling high voltage power, which may continuously and safely collect and store various pieces of data generated in relation to the operation thereof at all times, thereby making it possible to secure basis data for cause analysis in the event of an accident or breakdown related to the power charging/discharging facility. It is another objective of the present disclosure to provide an integrated control/risk prediction server which may receive in real time data collected in the power charging/discharging facility and analyze the data, thereby predicting risk occurrence possibility in real-time and notifying the corresponding power charging/discharging facility of the predicted risk. It is another objective of the present disclosure to provide a power charging/discharging facility which may collect discharge power from e-mobility using a battery of the e-mobility as an external power source, store the collected power directly or in energy storage systems (ESS), and provide the stored power as charge power for other e-mobility, thereby supporting sharing of power between e-mobilities.

### SOLUTION TO PROBLEM

According to an aspect of the present disclosure, provided is a power charging/discharging facility that operates to provide, upon request, charging power to a first e-mobility. The power charging/discharging facility of the present disclosure includes a sensor portion, the sensor portion comprising one or more sensors of a camera sensor, a shock detection sensor, a vibration detection sensor, a temperature sensor, a humidity sensor, a rain sensor, and an electric leakage sensor, an event data recording device for the power charging/discharging facility, and a power line for charging power supporting providing of the charging power from the power charging/discharging facility to the first e-mobility, wherein the event data recording device includes a housing, a data receiving portion configured to continuously receive event data about the power charging/discharging facility, wherein the event data comprises one or more pieces of measurement information from the one or more sensors of the sensor portion, and a data recording portion configured to store the event data.

According to an embodiment of the present disclosure, the power charging/discharging facility may further operate to receive, upon request, discharge power from a second e-mobility, and may further include a power line for discharge power to support receiving of the discharge power from the second e-mobility.

According to an embodiment of the present disclosure, the power charging/discharging facility may further include an identification information acquisition portion configured to acquire identification information of the first or second e-mobility, an authentication portion configured to authenticate the first or second e-mobility using the identification information, a request receiving portion configured to receive a first request from the first e-mobility or a second request from the second e-mobility, the first request including information about a charging power providing request to the first e-mobility and a charging power amount, and the second request including information about a discharge power receiving request from the second e-mobility and a discharge power amount, a payment processing unit configured to perform a billing or reverse billing process based on the received first request or second request, and an operation control unit configured to control the charging power to be provided from the power charging/discharging facility to the first e-mobility through the power line for charging power based on the first request, and the discharge power to be received from the second e-mobility to the power charging/discharging facility through the power line for discharge power based on the second request.

According to an embodiment of the present disclosure, the event data further include information about the providing of the charging power from the power charging/discharging facility to the first e-mobility, and the information about the providing of the charging power may include a time when the providing of the charging power occurs, an amount of the charging power provided, and billing information about the providing of the charging power.

According to an embodiment of the present disclosure, the event data may further include information about the receiving of the discharge power from the second e-mobility to the power charging/discharging facility, and the information about the receiving of the discharge power may include a time when the receiving of the discharge power occurs, an amount of the discharge power received, and reverse billing information about the receiving of the discharge power.

According to an embodiment of the present disclosure, the power charging/discharging facility may further include a power connection to a power system, and the charging power provided to the first e-mobility may be received from the power system through the power connection.

According to an embodiment of the present disclosure, the power charging/discharging facility may further include an ESS, and the discharge power received from the second e-mobility may be stored in the ESS or provided to another first e-mobility connected to the power charging/discharging facility as charging power for the another first e-mobility.

According to an embodiment of the present disclosure, the power charging/discharging facility may further include a communication portion configured to communicate with a server through an external communication network according to a predetermined communication protocol, and an emergency operation control unit configured to control the providing of the charging power or the receiving of the discharge power by the power charging/discharging facility to be prevented, based on a signal received through the external communication network and the communication portion.

According to an embodiment of the present disclosure, the data recording portion may include a recording device of a write once read many (WORM) type with a delete-proof function.

According to an embodiment of the present disclosure, the data recording portion may be further configured to store the event data for each predetermined write unit, and the data recording portion may be further configured to store the event data by applying encryption by a predetermined encryption key for each write unit of the event data, when the event data is recorded for each predetermined write unit in the data recording portion, a decryption key corresponding to the encryption key being accessible only by a specific person granted predetermined authority.

According to an embodiment of the present disclosure, the data recording portion may be further configured to store the event data for each predetermined write unit, and the data recording portion may include an electronic fingerprint generation portion configured to generate an electronic fingerprint for each write unit of the event data, when the event data is recorded for each predetermined write unit in the data recording portion, the electronic fingerprint being hash information acquired by applying a predetermined hash function to the event data of each write unit.

According to an embodiment of the present disclosure, the power charging/discharging facility may further include a communication portion configured to communicate with a server through an external communication network server according to a predetermined communication protocol, and the electronic fingerprint generated by the electronic fingerprint generation portion may be transmitted to an external electronic fingerprint server through the communication portion and the external communication network.

According to an embodiment of the present disclosure, the housing may be a heat-resistant and explosion-proof housing having heat resistance to the temperature of 1500°C or more, and the housing may include titanium or a titanium alloy.

According to another aspect of the present disclosure, a computer device, which operates to manage a plurality of power charging/discharging facilities, corresponding to one of the power charging/discharging facilities described above, includes a communication portion configured to communicate with each of the plurality of power charging/discharging facilities according to a predetermined communication protocol through an external communication network, and an information recording portion configured to operate to receive and store event data from each event data recording device of each of the power charging/discharging facilities through the communication portion.

According to an embodiment of the present disclosure, the computer device may further include a mobile device database storing identification information of each of e-mobilities that are preregistered, an authentication portion configured to receive identification information of a predetermined e-mobility through the communication portion, and to authenticate the e-mobility through a comparison between the received identification information and the mobile device database, a billing/reverse billing table storing a billing reference about an e-mobility that received charging power from the power charging/discharging facility and a reverse billing reference about an e-mobility that provides discharge power to the power charging/discharging facility, and a payment processing unit configured to perform a billing or reverse billing process about the e-mobility, based on a request from the e-mobility that is authenticated and the billing/reverse billing table.

According to an embodiment of the present disclosure, the mobile device database may further include electronic wallet information registered for each e-mobility, and the billing or reverse billing process by the payment processing unit is performed by transferring a predetermined electronic money to/from an electronic wallet registered for the e-mobility from/to another predetermined electronic wallet.

According to an embodiment of the present disclosure, the computer device may further include a risk prediction model portion configured to generate and store a risk prediction model for the power charging/discharging facility, based on event data from each event data recording device of each power charging/discharging facility, and a risk prediction portion configured to generate a risk prediction signal for a corresponding power charging/discharging facility, based on the risk prediction model and event data recording device of a predetermined power charging/discharging facility.

According to an embodiment of the present disclosure, the computer device may further include an emergency control signal generation portion configured to generate and transmit an emergency operation control signal to stop an operation of the power charging/discharging facility, when the risk prediction portion generates the risk prediction signal for the power charging/discharging facility.

According to an embodiment of the present disclosure, the computer device may further include a power charging/discharging facility database storing identification information and position information of each of a plurality of power charging/discharging facilities, and a power charging/discharging facility information providing portion configured to provide map and operation information of each power charging/discharging facility, based on the power charging/discharging facility database, the operation information including operation stop information of the power charging/discharging facility when the emergency operation control signal is generated for the power charging/discharging facility.

According to an embodiment of the present disclosure, the server device may be implemented by a plurality of distributed computers.

### ADVANTAGEOUS EFFECTS OF DISCLOSURE

According to an embodiment of the present disclosure, in the event of an accident or malfunction related to the power charging/discharging facility, by analyzing data of an event data recording device of the corresponding power charging/discharging facility, basis data for analysis of the cause of the accident or breakdown may be secured. According to an embodiment of the present disclosure, a control server may receive data collected from the power charging/discharging facility in real time, analyze the data, and predict a real-time risk occurrence possibility, and thus, accidents can be prevented in advance by notifying the possibility of risk in advance or stopping the operation in a timely manner with a power charging/discharging facility where risk is predicted. According to an embodiment of the present disclosure, by encouraging power sharing between e-mobilities through the power charging/discharging facility, sufficient charging power is secured in a timely manner and simultaneously e-mobility may be prevented from being unable to charge on time due to a lack of charging facilities.

### BRIEF DESCRIPTION OF DRAWINGS

FIG. 1 is a view schematically illustrating the configuration of a power charging/discharging facility system 100 according to an embodiment of the present disclosure.
FIG. 2 is a functional block diagram schematically illustrating the exemplary functional configuration of a power charging/discharging facility 120 of FIG. 1.
FIG. 3 is a functional block diagram schematically illustrating the exemplary functional configuration of an integrated control/risk analysis server 140 of FIG. 1.
FIG. 4 is an operation flowchart showing the flow of a power share operation between e-mobilities 110, according to an embodiment of the present disclosure.
FIG. 5 is an operation flowchart showing the flow of an operation of monitoring and predicting, by an integrated control/risk analysis server 140 of FIG. 1, a risk of a power charging/discharging facility, according to an embodiment of the present disclosure.

### MODE OF DISCLOSURE

The present disclosure will now be described more fully with reference to the accompanying drawings, in which embodiments of the present disclosure are shown. The present disclosure may, however, be embodied in many different forms and should not be construed as being limited to the embodiments set forth herein; rather, these embodiments are provided so that this disclosure will be thorough and complete, and will fully convey the concept of the present disclosure to those skilled in the art.

Furthermore, the terms used in the specification are merely used to describe embodiments, and are not intended to limit the present disclosure. An expression used in the singular encompasses the expression of the plural, unless it has a clearly different meaning in the context. As used in the specification, the term "and/or" includes any one of listed items and all of at least one combination of the items. In the specification, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

Terms such as "...unit," "... module," etc. stated in the specification may signify a unit to process at least one function or operation and the unit may be embodied by hardware, software, or a combination of hardware and software. Furthermore, a plurality of "modules" or a plurality of "portions" may be integrated into at least one of modules to be implemented as at least one of processors (not shown), except a "module" or "portion" that needs to be implemented as specific hardware.

Hereinafter, an embodiment of the present disclosure is described in detail with reference to the accompanying drawings.

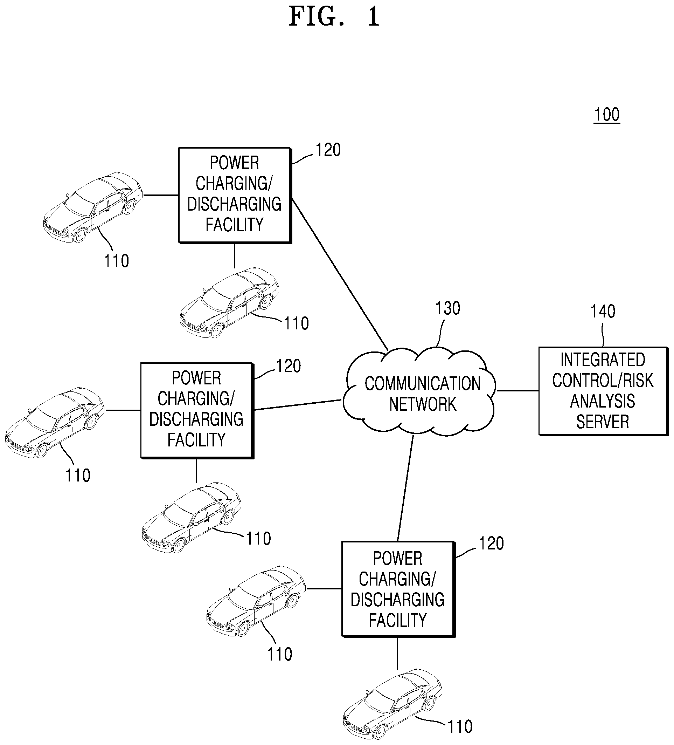

FIG. 1 is a view schematically illustrating the configuration of a power charging/discharging facility system 100 according to an embodiment of the present disclosure. As illustrated, the power charging/discharging facility system 100 may include a plurality of e-mobilities 110, a plurality of power charging/discharging facilities 120, a communication network 130, and an integrated control/risk prediction server 140.

According to an embodiment of the present disclosure, each of the plurality of e-mobilities 110 may be a mobile device that moves using electric power as a power source, for example, an electric vehicle, an electric motorcycle, an electric bicycle, a drone, an electric vessel, and the like (not limited thereto). According to an embodiment of the present disclosure, each of the e-mobilities 110 may include a chargeable/dischargeable battery and a battery management system for managing the charge/discharge state of the battery. According to an embodiment of the present disclosure, the e-mobilities 110 may be driven purely with electricity only, and in a hybrid form which can be driven with both electricity and existing fossil fuel such as gasoline and the like, and the present disclosure is not limited in relation to any specific form of e-mobility. In the present drawings, although each of the e-mobilities 110 is connected to a specific power charging/discharging facility 120, this is a mere example for explanation, and it is obvious that each of the e-mobilities 110 may be connected to a predetermined power charging/discharging facility 120 for power charge/discharge and then separated therefrom. Furthermore, in the present drawings, it is illustrated that two e-mobilities 110 are connected to each of the power charging/discharging facilities 120, the present disclosure is not limited thereto. According to another embodiment of the present disclosure, one or two more e-mobilities 110 may be simultaneously connected to the power charging/discharging facilities 120.

According to an embodiment of the present disclosure, the power charging/discharging facilities 120 may be an apparatus for providing charging power for each of the e-mobilities 110. According to an embodiment of the present disclosure, the power charging/discharging facilities 120 may be connected to a power system and may operate to receive commercial power therefrom and provide the received power to the e-mobilities 110, and may include ESS equipment and operate to provide power stored in the ESS equipment to the e-mobilities 110. Although not illustrated, according to an embodiment of the present disclosure, the ESS equipment may be connected to an external renewable energy generation module or power system to store power receiving therefrom in an internal battery, and by discharging and output the power stored in the internal battery, may provide the power to the e-mobilities 110 through related components/parts of the power charging/discharging facilities 120. According to an embodiment of the present disclosure, the power charging/discharging facilities 120 may also receive electric energy discharged and output from the battery of the e-mobilities 110 and store the energy in (the internal battery of) the ESS equipment, and receive electric energy discharged and output from the battery of the e-mobilities 110 and directly transmit the energy as charging power for another e-mobility 110.

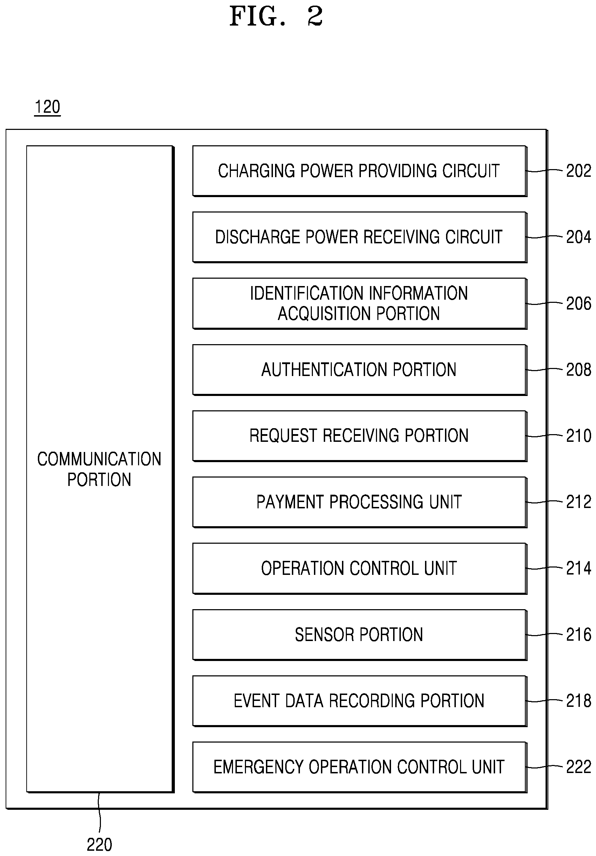

According to an embodiment of the present disclosure, each of the power charging/discharging facilities 120 may have a housing, and one or more sensors may be provided inside/outside the housing. According to an embodiment of the present disclosure, each of the power charging/discharging facilities 120 may include an event data recording device that receives and stores measurement data of each sensor provided inside/outside the housing and other various pieces of data related to the operation of the power charging/discharging facilities 120. According to an embodiment of the present disclosure, each of the power charging/discharging facilities 120 may also transmit the whole or part of data stored in the event data recording device to the integrated control/risk prediction server 140 through the communication network 130. According to an embodiment of the present disclosure, each of the power charging/discharging facilities 120 may receive a control signal from the integrated control/risk prediction server 140 and stop the charge/discharge operation for the e-mobilities 110 based on the received control signal. The power charging/discharging facilities 120 and each event data recording device included therein will be described in detail with reference to FIG. 2.

According to an embodiment of the present disclosure, the communication network 130 may be a communication network that enables each of the power charging/discharging facilities 120 and the integrated control/risk prediction server 140 described below to communicate with each other, according to a predetermined wired or wireless communication protocol. According to an embodiment of the present disclosure, the communication network 130 may enable each of the power charging/discharging facilities 120 installed in various places and the integrated control/risk prediction server 140 to mutually transceive various pieces of information.

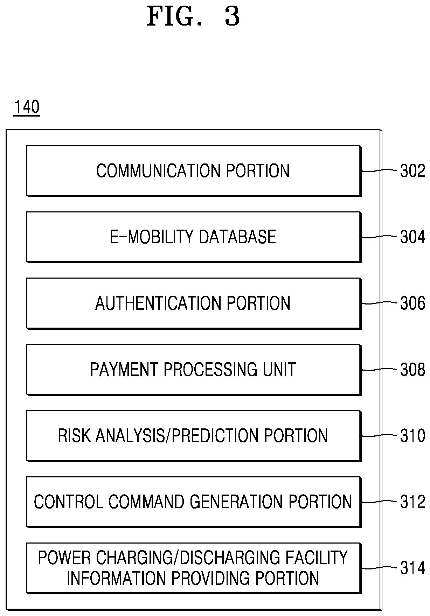

According to an embodiment of the present disclosure, the integrated control/risk prediction server 140 may receive or transmit various pieces of information from or to each of the power charging/discharging facilities 120 through the communication network 130. According to an embodiment of the present disclosure, the integrated control/risk prediction server 140 may continuously collect event data of each of the power charging/discharging facilities 120, for example, pieces of information, such as environments, electric leakage, operation data, and the like, measured and collected from each sensor installed in each of the power charging/discharging facilities 120, and generate and update a risk prediction model for the power charging/discharging facilities 120 based on the collected data. According to an embodiment of the present disclosure, the integrated control/risk prediction server 140 may predict, by using a generated risk prediction model, a risk occurrence probability of safety accident occurrence for each of the power charging/discharging facilities 120, for example, fire, electric leakage, and the like, by applying information received from each of the power charging/discharging facilities 120, and notify each of the power charging/discharging facilities 120 or a manager thereof of a predicted risk according to a predetermined protocol. The functional configuration and operation of the integrated control/risk prediction server 140 will be further described below with reference to FIG. 3.

FIG. 2 is a functional block diagram schematically illustrating the exemplary functional configuration of the power charging/discharging facility 120 of FIG. 1. As illustrated, the power charging/discharging facility 120 may include a charging power providing circuit 202, a discharge power receiving circuit 204, an identification information acquisition portion 206, an authentication portion 208, a request receiving portion 210, a payment processing unit 212, an operation control unit 214, a sensor portion 216, an event data recording portion 218, a communication portion 220, and an emergency operation control unit 222.

According to an embodiment of the present disclosure, the charging power providing circuit 202 may be a circuit for providing charging power to the e-mobilities 110 that requests charging from the power charging/discharging facilities 120. According to an embodiment of the present disclosure, the charging power providing circuit 202, although not illustrated in detail, may include a voltage converter, an electric leakage detector/breaker, a power supply line, a power amount detector/calculator, a relay, and the like, and a person skilled in the art could well know a specific configuration for providing charging power. According to an embodiment of the present disclosure, the charging power providing circuit 202, as described above (although not illustrated in detail), may be connected to a commercial power system and may operate to receive commercial power therefrom and provide the received power to the e-mobilities 110 through the charging power providing circuit 202. According to an embodiment of the present disclosure, the power charging/discharging facilities 120 may include separate ESS equipment (not shown), may be connected to a commercial power system or a renewable energy generation module and the like for solar power, wind power, geothermal heat, marine energy, and the like, and may operate to store the power received therefrom in the internal battery of the ESS equipment and provide the power stored in the internal battery to the e-mobilities 110 through the charging power providing circuit 202. According to an embodiment of the present disclosure, the charging power providing circuit 202 may operate to receive power externally from the e-mobilities 110 through the discharge power receiving circuit 204, in conjunction with the discharge power receiving circuit 204 described below, and provide the power to the e-mobilities 110 that request charging power.

According to an embodiment of the present disclosure, the discharge power receiving circuit 204 may be a circuit for receiving power discharged and output from the battery of the e-mobilities 110, in response to a request from the e-mobilities 110 that desire to share extra power with other e-mobilities. According to an embodiment of the present disclosure, the discharge power receiving circuit 204 may include, although not illustrated in detail, a voltage converter, an electric leakage detector/breaker, a power supply line, a power amount detector/calculator, a relay, and the like, and a person skilled in the art could well know a specific configuration for discharge power receiving. According to an embodiment of the present disclosure, the discharge power receiving circuit 204, as described above (although not illustrated in detail), may store the power received from the e-mobilities 110 in the internal battery (not shown) of the ESS equipment in the power charging/discharging facilities 120. According to another embodiment of the present disclosure, the discharge power receiving circuit 204, in conjunction with the charging power providing circuit 202 as described above, may directly provide power received from one of the e-mobilities 110 through the discharge power receiving circuit 204, as charging power for other e-mobilities 110 through the charging power providing circuit 202.

According to an embodiment of the present disclosure, the identification information acquisition portion 206 may be an information reading device for acquiring identification information of each of the e-mobilities 110. According to an embodiment of the present disclosure, the identification information acquisition portion 206 may acquire identification information of the e-mobilities 110 in various forms, such as an electric signal, an optical signal, a wired/wireless communication signal, and the like, through the e-mobilities 110 or a card or a communication terminal (not shown) and the like possessed by a user of one of the e-mobilities 110. According to an embodiment of the present disclosure, the identification information acquisition portion 206 may read, for example, license plate information and the like of the e-mobilities 110 that approaches the power charging/discharging facilities 120 to charge or discharge, through image capturing and analysis and acquire the corresponding identification information of the e-mobilities 110 therefrom. According to an embodiment of the present disclosure, the identification information acquisition portion 206 may read and acquire information stored in a card possessed by a user of one of the e-mobilities 110, that is, identification information of the corresponding one of the e-mobilities 110 in a contact or non-contact manner. According to an embodiment of the present disclosure, the identification information acquisition portion 206 may receive identification information of the corresponding one of the e-mobilities 110 from a communication terminal possessed by a user of one of the e-mobilities 110 in a wired/wireless communication manner, but the present disclosure is not limited to a specific form. According to an embodiment of the present disclosure, the identification information acquisition portion 206 may acquire identification information in the form of QR code from the e-mobilities 110 or a card or a communication terminal possessed by a user.

According to an embodiment of the present disclosure, the authentication portion 208 may authenticate the corresponding e-mobilities 110 based on the identification information of the e-mobilities 110 acquired by the identification information acquisition portion 206. According to an embodiment of the present disclosure, the authentication portion 208 may authenticate the corresponding e-mobility 110 by comparing the above acquired identification information with previously registered information independently or through, for example, a communication with the integrated control/risk analysis server 140.

According to an embodiment of the present disclosure, the request receiving portion 210 may, in relation to the e-mobilities 110, may receive, from a user, a charging power providing request or a discharge power receiving request with respect to the corresponding e-mobility 110. According to an embodiment of the present disclosure, the charging power providing request or discharge power receiving request received by the request receiving portion 210 may include information about each of a requested charging power amount or a requested discharge power amount. According to an embodiment of the present disclosure, after the authentication of the e-mobility 110 by the authentication portion 208 described above, the request receiving portion 210 may receive a request from the e-mobility 110. According to an embodiment of the present disclosure, the request receiving portion 210 may include a touch-type or button-type user manipulation panel and the like through which a user can input a desired request information, but the present disclosure is not limited thereto.

According to an embodiment of the present disclosure, when the request received by the request receiving portion 210 is a charging power providing request, the payment processing unit 212 may perform a billing process thereof. According to an embodiment of the present disclosure, when the request received by the request receiving portion 210 is a discharge power providing request, the payment processing unit 212 may perform a reverse billing process thereof. According to an embodiment of the present disclosure, the payment processing unit 212 may perform the billing or reverse billing process described above through, for example, a communication with the integrated control/risk analysis server 140, an external financial server, and/or the like. According to an embodiment of the present disclosure, the billing or reverse billing process described above may be performed by a method of payment or recovery of electronic money about a preregistered electronic money wallet related to each of the e-mobilities 110 or each corresponding user, but the present disclosure is not limited thereto.

According to an embodiment of the present disclosure, after the authentication of the e-mobilities 110 and the billing/reverse billing process are all performed, in response to the request from the e-mobility 110, that is, the charging power providing request or discharge power receiving request, the operation control unit 214 may control to provide charging power to the corresponding e-mobility 110 through the charging power providing circuit 202, or receive discharge power from the corresponding e-mobility 110 through the discharge power receiving circuit 204.

According to an embodiment of the present disclosure, the sensor portion 216 may include one or more sensors, for example, a camera sensor, a shock detection sensor, a vibration detection sensor, a temperature sensor, a humidity sensor, a rain sensor, and electric leakage sensor, and the like, which are installed inside/outside the power charging/discharging facility 110. According to an embodiment of the present disclosure, the sensor portion 216 may include various other sensors, such as various gas sensors for carbon monoxide, carbon dioxide, and the like, a wind speed sensor, a wind direction sensor, a gyro sensor, and the like. According to an embodiment of the present disclosure, each sensor of the sensor portion 216 may obtain various measurement values of internal/external environments and states of the corresponding power charging/discharging facility 110.

According to an embodiment of the present disclosure, the event data recording portion 218 may continuously receive and store measurement information from the respective sensors of the sensor portion 216, through a wired/wireless communication connection and the like. According to an embodiment of the present disclosure, the event data recording portion 218 may include a housing, and the housing may be a heat-resistant and explosion-proof housing having heat resistance to a temperature of 1500°C or more. According to an embodiment of the present disclosure, the housing for the event data recording portion 218 may include titanium or a titanium alloy, but the present disclosure is not limited thereto. According to an embodiment of the present disclosure, the event data recording portion 218 may receive and store not only measurement information received from the respective sensors of the sensor portion 216 described above, but also pieces of information about transmission of charging power or discharge power between the corresponding power charging/discharging facility 120 and the e-mobilities 110. According to an embodiment of the present disclosure, for example, when charging power is provided to the e-mobilities 110, the event data recording portion 218 may store a time when the charging power providing occurs, a charging power amount, related billing information, and the like. According to an embodiment of the present disclosure, for example, when discharge power is received from the e-mobilities 110, the event data recording portion 218 may store a time when the discharge power receiving occurs, a discharge power amount, related reverse billing information, and the like. According to an embodiment of the present disclosure, the event data recording portion 218 may receive and store parts or a combination of the whole of various pieces of information including various states or operation information of the ESS equipment (not shown) of the power charging/discharging facilities 120, for example, a voltage or temperature for each battery cell or module, PCB temperature information, a current, a temperature, SOC, SOH state information, a voltage, current, or frequency information of PMS, state information such as effective power, invalid power, and the like, failure event occurrence information such as ground fault, short circuit, a SW error, and the like. According to an embodiment of the present disclosure, the event data recording portion 218 may receive and store information about various other events occurring related to the operation of the power charging/discharging facilities 120. According to embodiments of the present disclosure, pieces of event data recorded in the event data recording portion 218 may be kept and maintained safe inside the heat-resistant and explosion-proof housing and the like, and may be used as basis data for determining the cause when an accident related to the power charging/discharging facility 110 occurs. According to an embodiment of the present disclosure, the event data recording portion 218 may include WORM memory. According to an embodiment of the present disclosure, the event data recording portion 218 may operate to seal and store the information stored therein in a delete-proof state for a predetermined period and to be automatically deleted permanently after the predetermined period.

According to an embodiment of the present disclosure, the event data recording portion 218 may classify various pieces of information to store into predetermined units (e.g., acquisition time units, device units from which information is acquired, and/or the like, but the present disclosure is not limited thereto), and store a hash value (or a predetermined form of electronic fingerprint) according to a predetermined hash function, for each unit information, with the corresponding information. By storing each piece of unit information with a corresponding hash value, when the stored information is later reconstructed and analyzed, it is possible to determine whether the information has been falsified or altered, and guarantee authenticity of information. According to an embodiment of the present disclosure, the electronic fingerprint generated from the event data recording portion 218 may be transmitted to and stored in an external electronic fingerprint server through the communication network 130. According to an embodiment of the present disclosure, the event data recording portion 218 may classify various pieces of information to store into predetermined units and store the information by applying encryption using a predetermined encryption key for each piece of unit information. According to an embodiment of the present disclosure, the encryption key used in this state may correspond to, for example, a decoding key that a manager granted a predetermined authority secretly manages.

According to an embodiment of the present disclosure, the communication portion 220 may support the power charging/discharging facilities 120 to communicate with the external integrated control/risk prediction server 140 and other external servers (e.g., a payment server, an electronic fingerprint server, and the like) according to a predetermined communication protocol, through the communication network 130. According to an embodiment of the present disclosure, the communication portion 220 may transmit the whole or part of various pieces of information stored in the event data recording portion 218 of the power charging/discharging facilities 120 to the integrated control/risk prediction server 140 through the external communication network 130. According to an embodiment of the present disclosure, the communication portion 220 may transmit, for example, the internal/external environment and state information of the power charging/discharging facilities 120 acquired by the sensor portion 216 to the integrated control/risk prediction server 140. According to an embodiment of the present disclosure, the communication portion 220 may transmit, to integrated control/risk prediction server 140, for example, various pieces of information about the providing of charging power to the e-mobilities 110 and/or the receiving of discharge power from the e-mobilities 110 through the power charging/discharging facility 110. According to an embodiment of the present disclosure, the communication portion 220 may transmit, for example, various state or operation information of the ESS equipment (not shown) of the power charging/discharging facilities 120, to the integrated control/risk prediction server 140.

According to an embodiment of the present disclosure, the communication portion 220 may receive a risk prediction signal from the integrated control/risk analysis server 140 through the external communication network 130. According to an embodiment of the present disclosure, the risk prediction signal received from the integrated control/risk analysis server 140 may be a signal notifying various accident occurrence possibilities, for example, an occurrence of fire about the corresponding power charging/discharging facility 120, and the like. According to an embodiment of the present disclosure, the risk prediction signal received from the integrated control/risk analysis server 140 may be, for example, a control command signal to pause the operation of the corresponding power charging/discharging facility 120.

According to an embodiment of the present disclosure, the emergency operation control unit 222 may operate to deactivate, in response to a control command signal received through the communication portion 220, various operations, such as the operation of the power charging/discharging facilities 120, for example, the charging power providing to the e-mobilities 110, the receiving of discharge power therefrom, the power receiving from an external power system and storing the power in ESS, and the like. According to an embodiment of the present disclosure, the deactivation by the emergency operation control unit 222 may be temporary, and later various operations of the corresponding power charging/discharging facility 120 may be reactivated. According to an embodiment of the present disclosure, when the deactivation is made by the emergency operation control unit 222, only after device checking and removing the deactivation state by a manager and the like, various operations of the corresponding power charging/discharging facility 120 may be activated.

FIG. 3 is a functional block diagram schematically illustrating the exemplary functional configuration of the integrated control/risk analysis server 140 of FIG. 1. As illustrated, the integrated control/risk analysis server 140 may include a communication portion 302, an e-mobility database 304, an authentication portion 306, a payment processing unit 308, a risk analysis/prediction portion 310, a control command generation portion 312, and a power charging/discharging facility information providing portion 314.

According to an embodiment of the present disclosure, the communication portion 302 may communicate with the power charging/discharging facilities 120 described above through the communication network 130, according to a predetermined wired or wireless communication protocol. According to an embodiment of the present disclosure, the communication portion 302 may receive various pieces of information, such as identification information of each of the e-mobilities 110, charging power providing or discharge power receiving request operation information, billing and reverse billing information, and the like, via each of the power charging/discharging facilities 120, through the communication network 130. According to an embodiment of the present disclosure, the communication portion 302 may receive the whole or part of various environment and operation state information of each of the power charging/discharging facilities 120, for example, information collected and stored in the event data recording portion 218, through the communication network 130. According to an embodiment of the present disclosure, the communication portion 302 may receive the hash value for each unit information described above together with the various environment and operation state information described above, from the power charging/discharging facilities 120, through the communication network 130.

According to an embodiment of the present disclosure, the e-mobility database 304 may be a database storing identification information about each of the e-mobilities 110 that is preregistered. According to an embodiment of the present disclosure, the authentication portion 306 may perform authentication on the corresponding e-mobility 110 by comparing the identification information received through the communication portion 302 with the information stored in the e-mobility database 304. According to an embodiment of the present disclosure, authentication result information by the authentication portion 308 may be transmitted back to the corresponding power charging/discharging facility 120 through the communication portion 302. According to an embodiment of the present disclosure, the e-mobility database 304 may include electronic wallet information registered in relation to each of the e-mobilities 110 or a corresponding user.

According to an embodiment of the present disclosure, the payment processing unit 308 may perform a necessary payment process based on request information by each of the e-mobilities 110 received through the communication portion 302, for example, each of charging power providing requests or discharge power receiving requests, charge amount or discharge amount information related thereto, and the like. According to an embodiment of the present disclosure, the payment processing unit 308 may store billing/reverse billing table based on a billing reference about the charging power providing from the power charging/discharging facilities 120 to the e-mobilities 110 and a reverse billing reference about discharge power received from the e-mobilities 110 to the power charging/discharging facilities 120, and perform the payment process described above based on the billing/reverse billing table. According to an embodiment of the present disclosure, when a charging power providing or discharge power receiving request occurs in relation to the corresponding e-mobility, the payment processing unit 308 may perform the payment process described above, by paying a predetermined electronic money to a corresponding electronic wallet or drawing out a predetermined electronic money therefrom, based on the electronic wallet information about each e-mobility stored in the e-mobility database.

According to an embodiment of the present disclosure, the risk analysis/prediction portion 310 may generate and store a risk prediction model for a power charging/discharging facility, based on through the communication portion 302 various pieces of information collected from each power charging/discharging facility 110. According to an embodiment of the present disclosure, the risk analysis/prediction portion 310 may also generate a risk prediction signal for the corresponding power charging/discharging facility, based on information received from a predetermined power charging/discharging facility and the risk prediction model. According to an embodiment of the present disclosure, the risk analysis/prediction portion 310 may predict a risk (e.g., fire) occurrence probability about a specific power charging/discharging facility 110, as a mere example, by, for example, applying temperature information received from each power charging/discharging facility 110 to the risk prediction model. According to an embodiment of the present disclosure, the risk analysis/prediction portion 310 may generate a risk (e.g., fire, explosion, and the like) occurrence probability for the corresponding ESS 112, as a mere example, by, for example, applying temperature, humidity, shock, electric leakage, inclination, vibration information, and the like, received from the power charging/discharging facility 110, to the risk prediction model described above.

According to an embodiment of the present disclosure, when a risk prediction signal for a predetermined power charging/discharging facility 120 is generated by the risk analysis/prediction portion 310, the control command generation portion 312 may generate an emergency operation control signal to stop the operation of the power charging/discharging facility, and transmit the signal to the corresponding power charging/discharging facility 120 through the communication portion 302.

According to an embodiment of the present disclosure, the power charging/discharging facility information providing portion 314 may include a power charging/discharging facility database storing identification information and position information of each of the power charging/discharging facilities 120 managed by the integrated control/risk analysis server 140. According to an embodiment of the present disclosure, the power charging/discharging facility information providing portion 314 may provide map and operation information of each power charging/discharging facility, based on the power charging/discharging facility database. According to an embodiment of the present disclosure, the operation information provided by the power charging/discharging facility information providing portion 314 may include operation stop information of the power charging/discharging facilities 120, for example, when an emergency operation control signal is generated for each power charging/discharging facility.

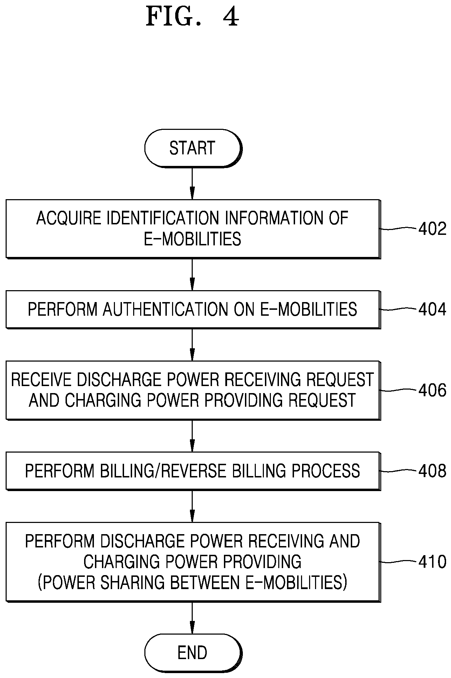

FIG. 4 is an operation flowchart showing the flow of a power share operation between e-mobilities, performed through the power charging/discharging facility 120, according to an embodiment of the present disclosure. In the present drawing, although an exemplary operation flow of a case in which power providing from an e-mobility for providing discharge power to an e-mobility for receiving charging power is directly performed through the power charging/discharging facilities 120 is illustrated, the present disclosure is not limited thereto. According to another embodiment of the present disclosure, as described above, it may be possible that power from an e-mobility (i.e., a power providing e-mobility) that discharges and provides extra power of a battery thereof is received by the power charging/discharging facilities 120 and stored in the ESS equipment and the like, and then, when an e-mobility (i.e., a power receiving e-mobility) that attempts to gain charging power is connected, the power stored in the ESS equipment is provided, thereby enabling power sharing.

As illustrated in FIG. 4, first, in a block 402, the power charging/discharging facilities 120 may acquire identification information of the e-mobilities 110 that have been connected / are to connect to the corresponding power charging/discharging facility 120. According to an embodiment of the present disclosure, one of the e-mobilities 110 may be a power providing e-mobility that provides extra power and another of the e-mobilities 110 may be a power receiving e-mobility that receives power. According to an embodiment of the present disclosure, the power charging/discharging facilities 120 may acquire identification information of the corresponding e-mobilities 110, in a contact or non-contact manner, directly from each of the e-mobilities 110 or through a card or communication terminal (not shown) and the like possessed by each of a user of one of the e-mobilities 110, for example, through the identification information acquisition portion 206 described above.

Next, in a block 404, the power charging/discharging facilities 120 may authenticate each of the e-mobilities 110 based on the receive identification information of each of the e-mobilities 110. According to an embodiment of the present disclosure, the power charging/discharging facilities 120 may authenticate each e-mobility 110 based on, for example, a database possessed thereby or a database stored in the corresponding server 140 through a communication with the integrated control/risk prediction server 140 through the communication network 130.

In a block 406, the power charging/discharging facilities 120 may receive a discharge power receiving request or a charging power providing request in relation to each of the e-mobilities 110. According to an embodiment of the present disclosure, the power charging/discharging facilities 120 may receive a discharge power receiving request, for example, from one of the e-mobilities 110 being in connection, that is, a power providing e-mobility, and a charging power providing request from another e-mobility, that is, a power receiving e-mobility. According to an embodiment of the present disclosure, each request may be received through an input manipulation device in the power charging/discharging facilities 120, or unlike the above, in a non-contact manner through a separate wired/wireless communication method. According to an embodiment of the present disclosure, as described above, for example, each received request may include requested discharge power amount information or requested charging power amount information.

Next, in a block 408, the power charging/discharging facilities 120 may perform, upon each request received in the block 406, a billing or reverse billing process for each of the e-mobilities 110. According to an embodiment of the present disclosure, for example, for the power providing e-mobility that provides discharge power, a reverse billing process according to the corresponding requested discharge power amount may be performed. According to an embodiment of the present disclosure, the reverse billing may be performed by, for example, a method of a point payment related to the corresponding e-mobility 110, or by a method of a predetermined positive electronic money payment to a related electronic wallet. According to an embodiment of the present disclosure, for example, for a power providing e-mobility that receives charging power, a billing process according to the corresponding requested charging power amount may be performed. According to an embodiment of the present disclosure, billing may be performed by, for example, a method of a card payment related to the corresponding e-mobility 110, or by a method of recovering a predetermined positive electronic money from the related electronic wallet. According to embodiments of the present disclosure, the billing or reverse billing in relation to each of the e-mobilities 110 may be performed by various methods, and the present disclosure is not limited to a specific example.

In a block 410, the power charging/discharging facilities 120 may operate to enable predetermined positive electric energy transmission between the power providing e-mobility 110 and the power receiving e-mobility 110, through each of charging or discharge related circuits of the corresponding power charging/discharging facility 120. Next, when such transmission of electric energy is completed, in a block 412, the power charging/discharging facilities 120 may record information about the performed transmission of electric energy, that is, the provision of power from the power providing e-mobility 110 to the power receiving e-mobility 110. According to an embodiment of the present disclosure, the power charging/discharging facilities 120 may store, for example, on the event data recording portion 128 described above, various relevant information, such as information related to the performed providing/transmission of power, for example, identification information about the related e-mobility 110, billing/reverse billing information, the amount of received discharge power, the amount of provided charging power, a time, a temperature, a leakage current amount, and the like. According to an embodiment of the present disclosure, the power charging/discharging facilities 120 may transmit the whole or part of the information about the performed providing/transmission of power, to the integrated control/risk prediction server 140 through the communication network 130.

In the present drawings, an exemplary operation flow related to the discharge power receiving and charging power providing is illustrated and described according to an exemplary order, but the present disclosure is not limited thereto. According to another embodiment of the present disclosure, it may be seen that the power sharing operation between the e-mobilities 110 may be performed according to the procedure flow in a different order than that described above.

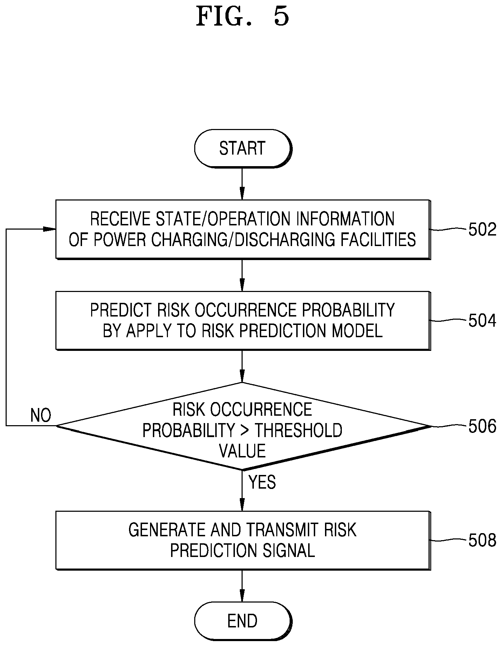

FIG. 5 is an operation flowchart showing the flow of an operation of monitoring and predicting, by the integrated control/risk analysis server 130 of FIG. 1, a risk of a power charging/discharging facility, according to an embodiment of the present disclosure.

First, in a block 502, the integrated control/risk analysis server 130 may receive state or operation information from the power charging/discharging facilities 120. According to an embodiment of the present disclosure, the integrated control/risk analysis server 130 may receive, for example, the whole or part of the state or operation information stored in the event data recording portion 218 of the power charging/discharging facilities 120. According to an embodiment of the present disclosure, the integrated control/risk analysis server 130 may receive, for example, information, such as temperature, humidity, leakage current, shock amount, vibration, and the like (which are merely examples, and the present disclosure is not limited thereto), which are collected by the sensor portion 216 of the power charging/discharging facilities 120.

Next, in a block 504, the integrated control/risk analysis server 130 may apply the information received in the block 502 to a risk prediction model. According to an embodiment of the present disclosure, the integrated control/risk analysis server 130 may accumulate and acquire various pieces of information collected from the power charging/discharging facilities 120, and generate and update the risk prediction model according to a predetermined prediction algorithm based on the acquired information. According to an embodiment of the present disclosure, the integrated control/risk analysis server 130 may predict a risk occurrence probability, such as fire, explosion, failure, electric leakage, and the like in the power charging/discharging facilities 120, based on, for example, various pieces of information accumulated and acquired from the power charging/discharging facilities 120.

In a block 506, the integrated control/risk analysis server 130 may determine whether the risk occurrence probability acquired in the block 504 exceeds a threshold value. When the determination result in the block 506 is that the risk occurrence probability exceeds the threshold value, the procedure goes to a block 508, and the integrated control/risk analysis server 130 may generate a risk prediction signal and transmit the generated signal to the corresponding power charging/discharging facility 120. According to an embodiment of the present disclosure, the risk prediction signal provided to the power charging/discharging facilities 120 may include, for example, a control command to temporarily stop the operation of the corresponding power charging/discharging facility 120. When the determination result in the block 506 is that the risk occurrence probability is not greater than the threshold value, the procedure returns to the block 502, and the subsequent operation may be performed.

As a person skilled in the art can see, the present disclosure is not limited to the description presented in the present disclosure, but may be modified, reconstructed, and replaced in various ways without departing from the scope of the present disclosure. It may be seen that various technologies described in the present specification may be embodiment by hardware, software, or a combination of hardware and software.

### INDUSTRIAL APPLICABILITY

The present disclosure may be used for a power charging/discharging facility for e-mobility and a real-time risk prediction server for managing the same.

## Claims

1. A power charging/discharging facility which operates to provide, upon request, charging power to a first e-mobility, the power charging/discharging facility comprising:
a sensor portion, the sensor portion comprising one or more sensors of a camera sensor, a shock detection sensor, a vibration detection sensor, a temperature sensor, a humidity sensor, a rain sensor, and an electric leakage sensor;
an event data recording device for the power charging/discharging facility; and
a power line for charging power supporting providing of the charging power from the power charging/discharging facility to the first e-mobility,
wherein the event data recording device comprises:
a housing;
a data receiving portion configured to continuously receive event data about the power charging/discharging facility, wherein the event data comprises one or more pieces of measurement information from the one or more sensors of the sensor portion; and
a data recording portion configured to store the event data.

2. The power charging/discharging facility of claim 1, further operating to receive, upon request, discharge power from a second e-mobility, and further comprising a power line for discharge power to support receiving of the discharge power from the second e-mobility.

3. The power charging/discharging facility of claim 2, further comprising:
an identification information acquisition portion configured to acquire identification information of the first or second e-mobility;
an authentication portion configured to authenticate the first or second e-mobility using the identification information;
a request receiving portion configured to receive a first request from the first e-mobility or a second request from the second e-mobility, the first request comprising information about a charging power providing request to the first e-mobility and a charging power amount, and the second request comprising information about a discharge power receiving request from the second e-mobility and a discharge power amount;
a payment processing unit configured to perform a billing or reverse billing process based on the received first request or second request; and
an operation control unit configured to control the charging power to be provided from the power charging/discharging facility to the first e-mobility through the power line for charging power based on the first request, and the discharge power to be received from the second e-mobility to the power charging/discharging facility through the power line for discharge power based on the second request.

4. The power charging/discharging facility of claim 1, wherein the event data further comprise information about the providing of the charging power from the power charging/discharging facility to the first e-mobility, and the information about the providing of the charging power comprises a time when the providing of the charging power occurs, an amount of the charging power provided, and billing information about the providing of the charging power.

5. The power charging/discharging facility of claim 2, wherein the event data further comprises information about the receiving of the discharge power from the second e-mobility to the power charging/discharging facility, and the information about the receiving of the discharge power comprises a time when the receiving of the discharge power occurs, an amount of the discharge power received, and reverse billing information about the receiving of the discharge power.

6. The power charging/discharging facility of claim 1, further comprising a power connection to a power system,
wherein the charging power provided to the first e-mobility is received from the power system through the power connection.

7. The power charging/discharging facility of claim 2, further comprising an ESS,
wherein the discharge power received from the second e-mobility is stored in the ESS or provided to another first e-mobility connected to the power charging/discharging facility as charging power for the another first e-mobility.

8. The power charging/discharging facility of claim 2, further comprising:
a communication portion configured to communicate with a server through an external communication network according to a predetermined communication protocol; and
an emergency operation control unit configured to control the providing of the charging power or the receiving of the discharge power by the power charging/discharging facility to be prevented, based on a signal received through the external communication network and the communication portion.

9. The power charging/discharging facility of claim 1, wherein the data recording portion comprises a recording device of a write once read many (WORM) type with a delete-proof function.

10. The power charging/discharging facility of claim 1, wherein the data recording portion is further configured to store the event data for each predetermined write unit, and the data recording portion is further configured to store the event data by applying encryption by a predetermined encryption key for each write unit of the event data, when the event data is recorded for each predetermined write unit in the data recording portion, a decryption key corresponding to the encryption key being accessible only by a specific person granted predetermined authority.

11. The power charging/discharging facility of claim 1, wherein the data recording portion is further configured to store the event data for each predetermined write unit, and the data recording portion comprises an electronic fingerprint generation portion configured to generate an electronic fingerprint for each write unit of the event data, when the event data is recorded for each predetermined write unit in the data recording portion, the electronic fingerprint being hash information acquired by applying a predetermined hash function to the event data of each write unit.

12. The power charging/discharging facility of claim 1, further comprising a communication portion configured to communicate with a server through an external communication network server according to a predetermined communication protocol,
wherein the electronic fingerprint generated by the electronic fingerprint generation portion is transmitted to an external electronic fingerprint server through the communication portion and the external communication network.

13. The power charging/discharging facility of claim 1, wherein the housing is a heat-resistant and explosion-proof housing having heat resistance to a temperature of 1500°C or more, and the housing comprises titanium or a titanium alloy.

14. A server device which operates to manage a plurality of power charging/discharging facilities, according to any one of claims 1 to 15, the server device comprising:
a communication portion configured to communicate with each of the plurality of power charging/discharging facilities according to a predetermined communication protocol through an external communication network; and
an information recording portion configured to operate to receive and store event data from each event data recording device of each of the power charging/discharging facilities through the communication portion.

15. The server device of claim 14, further comprising:
a mobile device database storing identification information of each of e-mobilities that are preregistered;
an authentication portion configured to receive identification information of a predetermined e-mobility through the communication portion, and to authenticate the e-mobility through a comparison between the received identification information and the mobile device database;
a billing/reverse billing table storing a billing reference about an e-mobility that received charging power from the power charging/discharging facility and a reverse billing reference about an e-mobility that provides discharge power to the power charging/discharging facility; and
a payment processing unit configured to perform a billing or reverse billing process about the e-mobility, based on a request from the e-mobility that is authenticated and the billing/reverse billing table.

16. The server device of claim 15, wherein the mobile device database further comprises electronic wallet information registered for each e-mobility, and
the billing or reverse billing process by the payment processing unit is performed by transferring a predetermined electronic money to/from an electronic wallet registered for the e-mobility from/to another predetermined electronic wallet.

17. The server device of claim 14, further comprising:
a risk prediction model portion configured to generate and store a risk prediction model for the power charging/discharging facility, based on event data from each event data recording device of each power charging/discharging facility; and
a risk prediction portion configured to generate a risk prediction signal for a corresponding power charging/discharging facility, based on the risk prediction model and event data recording device of a predetermined power charging/discharging facility.

18. The server device of claim 14, further comprising an emergency control signal generation portion configured to generate and transmit an emergency operation control signal to stop an operation of the power charging/discharging facility, when the risk prediction portion generates the risk prediction signal for the power charging/discharging facility.

19. The server device of claim 18, further comprising:
a power charging/discharging facility database storing identification information and position information of each of a plurality of power charging/discharging facilities; and
a power charging/discharging facility information providing portion configured to provide map and operation information of each power charging/discharging facility, based on the power charging/discharging facility database, the operation information comprising operation stop information of the power charging/discharging facility when the emergency operation control signal is generated for the power charging/discharging facility.

20. The server device of claim 14, wherein the server device is implemented by a plurality of distributed computers.
